# EUROPEAN PATENT SPECIFICATION

(11) **EP 3 326 710 B1**
(45) Date of publication and mention of the grant of the patent: **18.09.2019**
(21) Application number: 18150068.7
(22) Date of filing: 04.03.2016
(51) Int. Cl.: B32B 5/02, B32B 5/08, B32B 7/02, B32B 27/12, B32B 27/40, B32B 37/06

(54) **COMPOSITE TEXTILE**
VERBUNDTEXTIL
TEXTILE COMPOSITE

(43) Date of publication of application: 30.05.2018
(62) Divisional of application: 16158693.8
(73) Proprietor: Top Express Holding Limited, Taipei City (TW)
(72) Inventor: CHU, Chien-Chia, Taipei City (TW)
(74) Representative: Viering, Jentschura & Partner mbB Patent- und Rechtsanwälte

(56) References cited:
- EP-A2- 0 982 431
- DE-U1- 20 213 713
- DE-U1-202008 013 246
- US-A1- 2003 194 547
- US-A1- 2013 171 432

## Description

The present invention relates to a method of textile surface processing, especially to the method of producing a composite textile by combining a fabric layer with a membrane layer. The present invention also relates to the composite textile.

With the process of textile technology, functions in strength and water-proofing of a textile can be enhanced by surface processing with polymer materials such as coating processing or adhesive film processing.

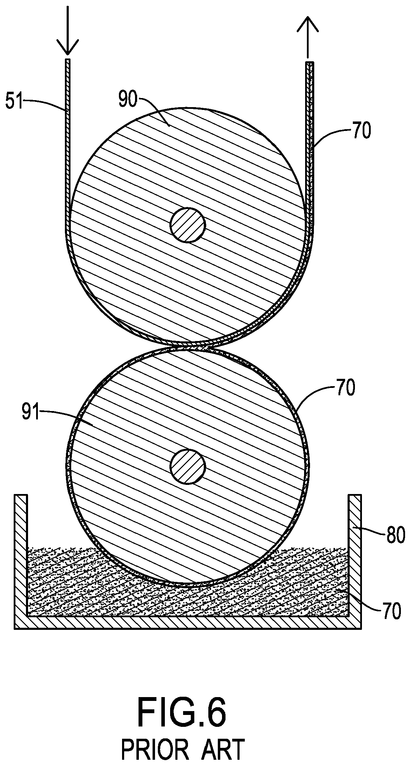

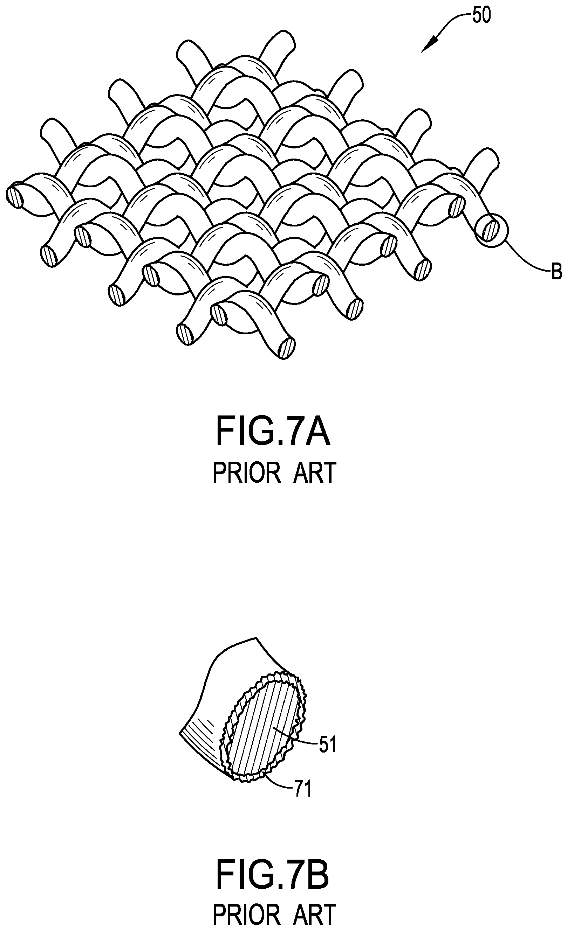

With reference to Figs. 6 and 7, a conventional coating processing method comprises: placing a polymer-coating solution 70 in a tank 80, wherein the polymer-coating solution 70 is prepared by dissolving the polymers in an organic solvent; delivering a textile 51 with a delivery roller 90, and carrying the polymer-coating solution 70 with a carrying roller 91, allowing the polymer-coating solution 70 to be coated on the textile 51; evaporating the organic solvent of the polymer-coating solution 70 followed by maturation to form a coated-textile 50 with coating a polymer layer 71 on the textile 51.

With references to Fig. 7A and 7B, for the reason that the polymer layer 71 is merely coated on the surface of the textile 51, the strength of the coated-textile 50 cannot be enhanced. Besides, the organic solvent used in the conventional coating processing would extend the processing time to evaporate the organic solvent followed by maturation. Furthermore, part of the organic solvent remaining on the coated-textile 50 may be harmful to health and the environment.

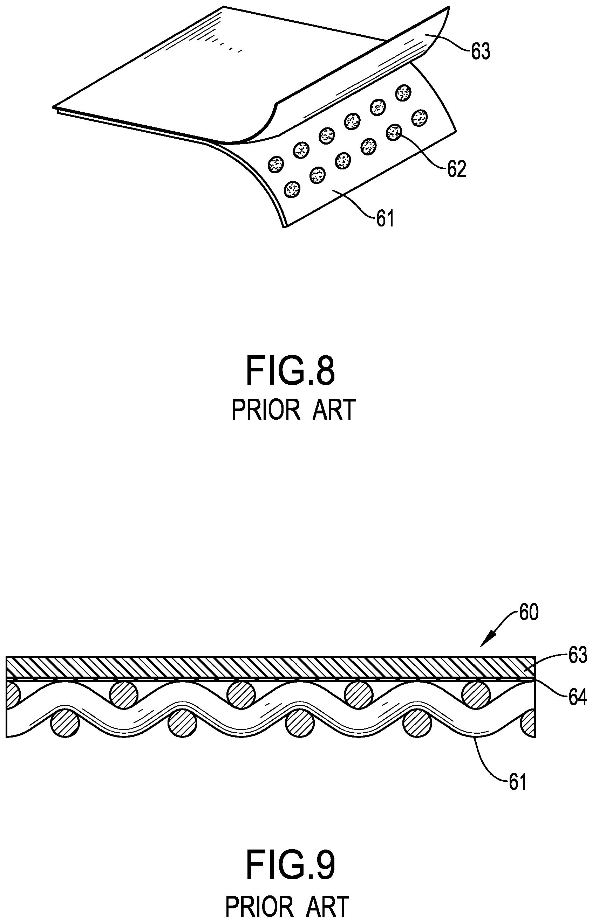

With references to Figs. 8 and 9, a conventional adhesive film processing method comprises: spot-coating a thermosol solution 62 on a surface of a textile 61, wherein the thermosol solution 62 is prepared by dissolving polymers in an organic solvent; sticking a film 63 on the surface of the textile 61 coated with the thermosol solution 62 followed by heating and pressing to form an adhesive film textile 60. The adhesive film textile 60 is composed of the textile 61, a thermosol layer 64 and the film 63, and the thermosol layer 64 is formed by the thermosol solution 62 spot-coated on the surface of the textile 61.

The organic solvent used for dissolving the thermosol solution 62 may remain on the adhesive film textile 60, so the adhesive film textile 60 may be harmful to health and the environment. Besides, combination of the textile 61 and the film 63 is affected by the interaction between the thermosol layer 64 and the textile 61 as well as the film 63. Therefore, the textile 61 and the film 63 of the adhesive film textile 60 will be detached if the adhesion of the thermosol solution 64 decreases after use for a long time.

The patent publication EP 0982431 A2 discloses a non-woven web, and polyolefins was extrusion-coated to one side of the non-woven web. The nonwoven web was made of polyethylene and / or polypropylene and / or polyethylene terephthalate and / or polyamide; however, all of the foresaid materials are not thermoplastic elastomers.

In addition, the patent publication US 2003/194547 A1 discloses a process for producing a composite structure comprising combining at least one first layer that has a first melting point with at least one second layer that has a second melting point lower than the first melting point; and applying heat to the at least one first layer and the at least one second layer so that the at least one second layer is at least partially melted to flow around the at least one first layer prior to resolidification to attach the at least one first layer to the at least one second layer. However, said US patent publication does not disclose any thermal and pressure conditions such as pre-heat temperature, hot-press temperature, or hot-press pressure, and heat and pressure may affect the quality of the composite structure. Furthermore, the first layer of said US patent publication is an expanded polytetrafluoroethylene beyond the elastic limit of the material to introduce permanent set or elongation to the fibrils, and the size of the pores of the first layer, which are micropores, may be in the range from about 0.01 microns (0.39 microinches) to about 10 microns (393.70 microinches) and in the range from about 0.3 microns (11.81 microinches) to about 5.0 microns (196.85 microinches). Moreover, the thermoplastic material of said US patent publication is solidified by the hot roll calendering mechanism in a temperature range that extends from about 246.11 degrees Celsius (475 degrees Fahrenheit) to about 265.56 degrees Celsius (510 degrees Fahrenheit).

The main objective of the invention is to provide a composite textile, and the composite textile comprises:
a first fabric layer which is formed by weaving, wherein material of the first fabric layer comprises thermoplastic elastomer or a combination of thermoplastic elastomer and thermoplastic polymer; wherein the first fabric layer comprises a first surface, a second surface and multiple pores; wherein the multiple pores are distributed on the first fabric layer and connect the first surface and the second surface; and
a first membrane layer, wherein material of the first membrane layer comprises thermoplastic elastomer or a combination of thermoplastic elastomer and thermoplastic polymer, and the melting point of the first membrane layer is lower than the melting point of the first fabric layer; wherein the first membrane layer comprises a third surface and a fourth surface, and the fourth surface of the first membrane layer is attached to the first surface of the first fabric layer, and parts of the fourth surface of the first membrane layer permeate into the multiple pores of the first fabric layer.

The fourth surface of the first membrane layer is attached to the first surface of the first fabric layer, and parts of the fourth surface of the first membrane layer permeating into the multiple pores of the first fabric layer allow the first membrane layer to bind with the first fabric layer tightly, and enhance the strength of the composite textile.

Preferably, the composite textile further comprises a second fabric layer; wherein material of the second fabric layer comprises thermoplastic elastomer, thermoplastic polymer or a combination thereof. The melting point of the second fabric layer is higher than that of the first membrane layer. The second fabric layer comprises a fifth surface, a sixth surface and multiple pores. The multiple pores are distributed on the second fabric layer and connect the fifth surface and the sixth surface. The third surface of the first membrane layer is attached to the fifth surface of the second fabric layer, and parts of the third surface of the first membrane layer permeate into the multiple pores of the second fabric layer.

Preferably, the composite textile further comprises a second membrane layer; wherein material of the second membrane layer comprises thermoplastic elastomer, thermoplastic polymer or a combination thereof; wherein the melting point of the second membrane layer is lower than that of the first fabric layer; wherein the second membrane layer comprises a third surface and a fourth surface, and the fourth surface of the second membrane layer is attached to the second surface of the first fabric layer, and parts of the fourth surface of the second membrane layer permeate into the multiple pores of the first fabric layer.

Preferably, the first fabric layer is formed by weaving with a yarn, wherein material of the yarn comprises thermoplastic elastomer or a combination of thermoplastic elastomer and thermoplastic polymer.

According to the present invention, the term "weaving" as used herein, includes, but not limited to knitting, circular weaving, plain weaving or weaving.

Preferably, the yarn is formed by twisting with a first sub-yarn and a second sub-yarn, wherein material of the first sub-yarn includes thermoplastic elastomer, thermoplastic polymer or a combination thereof; wherein material of the second sub-yarn includes thermoplastic elastomer, thermoplastic polymer or a combination thereof; and at least one of the first sub-yarn and the second sub-yarn comprises thermoplastic elastomer.

More preferably, the material of the first sub-yarn is thermoplastic polymer, and the material of the second sub-yarn is thermoplastic elastomer; wherein based on the total weight of the yarn, the weight percentage of the second sub-yarn is between 10 wt% and 90 wt%.

Preferably, the first fabric layer is formed by weaving with a first yarn and a second yarn, wherein material of the first yarn comprises thermoplastic elastomer, thermoplastic polymer or a combination thereof; wherein material of the second yarn comprises thermoplastic elastomer, thermoplastic polymer or a combination thereof; and at least one of the first yarn and the second yarn comprises thermoplastic elastomer.

Preferably, the material of the first fabric layer is the combination of thermoplastic elastomer and thermoplastic polymer; wherein the thermoplastic polymer has the hardness between 85A and 90D.

Preferably, the material of the first fabric layer is the combination of thermoplastic elastomer and thermoplastic polymer; wherein the thermoplastic polymer has the melting point higher than or equal to 160°C and lower than or equal to 300°C.

Preferably, the material of the first membrane layer is the combination of thermoplastic elastomer and thermoplastic polymer; wherein the thermoplastic polymer has the hardness between 10A and 98A.

Preferably, the material of the first membrane layer is the combination of thermoplastic elastomer and thermoplastic polymer; wherein the thermoplastic polymer has the melting point of the thermoplastic polymer higher than or equal to 50°C and lower than or equal to 150°C.

Preferably, the thermoplastic polymer includes polyethylene terephthalate (PET), polymethylmethacrylate (PMMA), polyvinyl chloride (PVC), nylon, polycarbonate (PC), polyoxymethylene (POM), polyolefin (POF), polyacrylonitrile (PAN), polystyrene (PS), polysulfone, polyethersulfone, polyurethane (PU), or any combination thereof.

Preferably, the thermoplastic elastomer is thermoplastic polyurethanes (TPU), thermoplastic olefin (TPO), thermoplastic polyamine (TPA), styrene-base thermoplastic elastomer (TPS), thermoplastic polyether ester elastomer (TPEE), thermoplastic rubber (TPR) or thermoplastic vulcanizate (TPV).

Preferably, the thickness of the first membrane layer is larger than or equal to 0.001 mm and smaller than or equal to 1 mm.

Preferably, the material of the first fabric layer is thermoplastic elastomer, and the material of the first membrane layer is thermoplastic elastomer.

Preferably, the hardness and the melting point of the thermoplastic elastomer can be modified by adjusting the ratio of a soft segment and a hard segment of the thermoplastic elastomer. Percentage of the soft segment in the thermoplastic elastomer is between 20% and 80%, and percentage of the hard segment in the thermoplastic elastomer is between 80% and 20%.

More preferably, the material of the first fabric layer is the same as that of the membrane layer. For the reason that the first fabric layer and the membrane layer comprise the same material, the first fabric layer can bind to the membrane layer more tightly, and the composite textile made by the first fabric layer and the membrane layer has better tearing strength.

Other objectives, advantages and novel features of the invention will become more apparent from the following detailed description when taken in conjunction with the accompanying drawings.

### In the drawings:

Fig. 1 is a perspective view of combination of a fabric layer and a membrane layer of Example 1 in accordance with the present invention;
Fig. 2 is a cross section view of a stacked structure in Example 1;
Fig. 3 is a cross section view of a composite textile in Example 1;
Fig. 4 is a perspective view of combination of a fabric layer and a membrane layer of Example 6 in accordance with the present invention;
Fig. 5 is a perspective view of combination of a fabric layer and a membrane layer of Example 8 in accordance with the present invention;
Fig. 6 shows processing of the conventional coated textile;
Fig. 7A is a perspective view of the coated textile in Fig. 6;
Fig. 7B is an enlarged view of the polymer layer coated on the surface of the textile in Fig. 6.
Fig. 8 shows processing of the conventional adhesive film textile; and
Fig. 9 is a perspective view of the adhesive film textile in Fig. 8.

### Example 1: Preparation of a composite textile

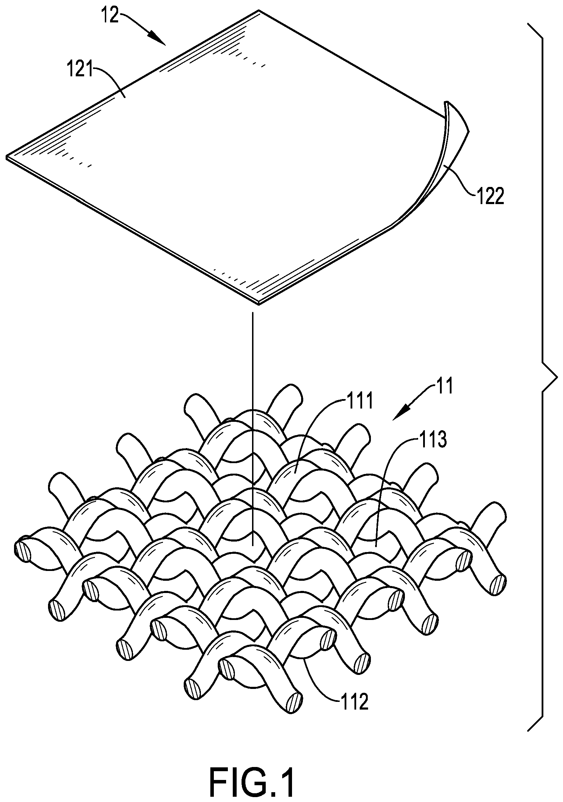

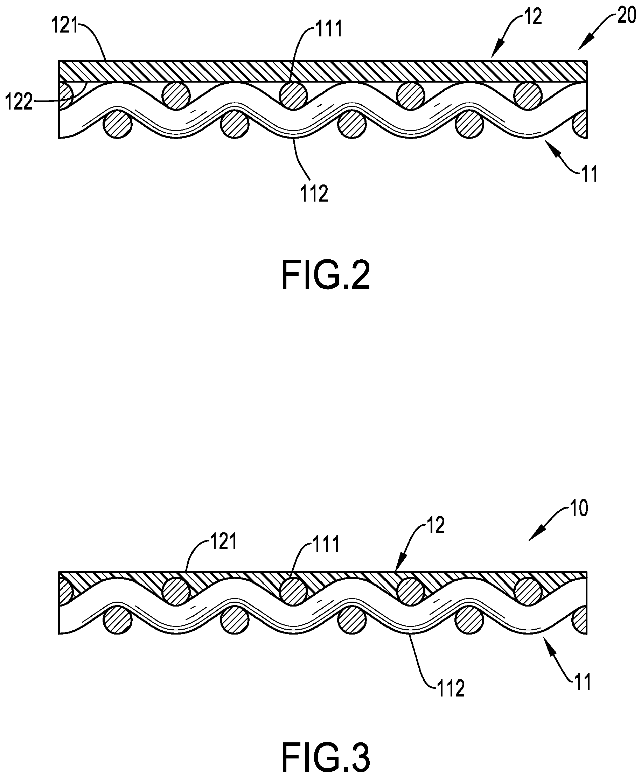

With references to Figs. 1 and 3, a method of producing a composite textile in accordance with the present invention was shown as follows.

Thermoplastic polyurethane with 85A hardness, 60:40 soft-segment/hard-segment ratio, 180°C melting point and 50,000 Da to 100,000 Da molecular weight was spun to form a yarn (300D/72F), and the yarn was tatted to form a fabric layer 11 with a size of 21 cm × 30 cm. The fabric layer 11 comprised a first surface 111, a second surface 112, and multiple pores 113. The first surface 111 was opposite to the second surface 112. The multiple pores 113 were distributed on the fabric layer 11, and each of the multiple pores 113 connected the first surface 111 and the second surface 112. Thermoplastic polyurethane with 98A hardness, 45:55 soft-segment/hard-segment ratio, 60°C melting point and 5,000 Da to 10,000 Da molecular weight was pressed out to form a membrane layer 12 by use of a film extrusion process. The membrane layer 12 was a plane with continuous phases, and a size of the membrane layer 12 was 21 cm × 30 cm, and the thickness of the membrane layer 12 was 0.025 mm. The membrane layer 12 comprised a third surface 121 and a fourth surface 122, and the third surface 121 was opposite to the fourth surface 122.

With reference to Fig. 2, the first surface 111 of the fabric layer 11 was attached to the fourth surface 122 of the membrane layer 12 to form a stacked structure 20. The stacked structure 20 was consisted of the fabric layer 11 and the membrane layer 12. The stacked structure 20 had an upper surface and a lower surface. The upper surface of the stacked structure 20 was the third surface 121 of the membrane layer 12, and the lower surface of the stacked structure 20 was the second surface 112 of the fabric layer 11. The first surface 111 of the fabric layer 11 was in contact with the fourth surface 122 of the membrane layer 12 to form an interface of the stacked structure 20. The upper surface and the lower surface of the stacked structure 20 were pre-heated at 60°C for 30 minutes, and then the upper surface and the lower surface of the stacked structure 20 were hot-pressed at 70°C hot-press temperature under 5 kg/cm² hot-press pressure for 5 minutes to form a combined structure. The combined structure was cooled down to room temperature to form a composite textile 10 (Fig. 3).

For the reason that the pre-heated temperature was equal to the melting point of the thermoplastic polyurethane during pre-heating and hot-pressing processes of the stacked structure 20, and the hot-press temperature was a little higher than the melting point of the thermoplastic polyurethane, the fourth surface 122 of the membrane layer 12 was in the molten state, allowing the fourth surface 122 of the membrane layer 12 to penetrate from the first surface 111 of the fabric layer 11 into the multiple pores 113 of the fabric layer 11 to form the combined structure. In other words, the interface clearly existed in the stacked structure 20 before pre-heating and pre-pressing processes; however, the interface between the membrane layer 12 and the fabric layer 11 was unobvious after pre-heating and pre-pressing the stacked structure 20. After cooling the combined structure to form the composite textile 10, the membrane layer 12 was able to bind with the fabric layer 11 tightly by penetrating parts of the membrane layer 12 into the multiple pores 113 of the fabric layer 11.

After hot-pressing, the combined structure had an upper surface and a lower surface. The upper surface of the combined structure was the third surface 121 of the membrane layer 12, and the lower surface of the combined structure was the second surface 112 of the fabric layer 11. As mentioned above, an interface of the combined structure positioned between the first surface 111 of the fabric layer 11 and the fourth surface 122 of the membrane layer 12 was unobvious.

With references to Figs. 1 and 3, the composite textile comprised the fabric layer 11 and the membrane layer 12. The fabric layer 11 had the first surface 111, the second surface 112, and the multiple pores 113. The first surface 111 was opposite to the second surface 112, and the multiple pores 113 were distributed on the fabric layer 11, and each of the multiple pores 113 connected the first surface 111 and the second surface 112. The membrane layer 12 had the third surface 121 and the fourth surface 122, and the third surface 121 was opposite to the fourth surface 122. The fourth surface 122 of the membrane layer 12 was attached to the first layer 111 of the fabric layer 11, and parts of the fourth surface 122 of the membrane layer 12 penetrated into the multiple pores 113 of the fabric layer 11. In other words, an interface of the composite textile 10 positioned between the fabric layer 11 and the membrane layer 12 was unobvious.

The method of producing the composite textile 10 was performed by use of the fabric layer 11 and the membrane layer 12 respectively having specific melting points under pre-heating, hot-pressing and cooling processes. No organic solvent was used in the method; therefore, the problem of residual organic solvents in the composite textile 10 was avoided, and the period of waiting for evaporating the organic solvents and maturation could be saved.

### Example 2: Preparation of a composite textile

A method of producing a composite textile in Example 2 was similar to that in Example 1. The differences between Example 2 and Example 1 were shown as follows. Thermoplastic olefin having 60D hardness, 35:65 soft-segment/hard-segment ratio, 150°C melting point and 60,000 Da to 80,000 Da molecular weight, as well as polypropylene having melting point 170°C and 300,000 Da to 400,000 Da were used in Example 2. The thermoplastic olefin was mixed with the polypropylene at a weight ratio of 1:2 to form a first polymer blend. The melting point of the first polymer blend was 160°C. The first polymer blend was spun to form a yarn (450D/144F), and then the yarn was tatted to form the fabric layer. Thermoplastic olefin with 80A hardness, 65:35 soft-segment/hard-segment ratio, 90°C melting point, and 30,000 Da to 50,000 Da molecular weight was pressed by a film extrusion process to form the membrane layer. The thickness of the membrane layer was 0.025 mm, and the pre-heat temperature, the hot-press temperature, and the hot-press pressure were respectively 90°C, 100°C and 5 kg/cm².

### Example 3: Preparation of a composite textile

A method of producing a composite textile in Example 3 was similar to that in Example 1. The differences between Example 3 and Example 1 were shown as follows. Thermoplastic polyamine having 60D hardness, 33:67 soft-segment/hard-segment ratio, 200°C melting point and 30,000 Da to 50,000 Da molecular weight was spun to form a first sub-yarn (150D/24F). Nylon 6 with melting point 255°C and 20,000 Da to 40,000 Da molecular weight was spun to form a second sub-yarn (150D/24F). A yarn (450D/72F) was formed by twisting the first sub-yarn with the second sub-yarn at a number ratio of 2:1. The yarn was tatted to form the fabric layer. Thermoplastic polyamine with 50D hardness, 40:60 soft-segment/hard-segment ratio, 130°C melting point, and 10,000 Da to 20,000 Da molecular weight was pressed by a film extrusion process to form the membrane layer. The thickness of the membrane layer was 0.025 mm, and the pre-heat temperature, the hot-press temperature, and the hot-press pressure were respectively 130°C, 140°C and 5 kg/cm².

### Example 4: Preparation of a composite textile

A method of producing a composite textile in Example 4 was similar to that in Example 1. The differences between Example 4 and Example 1 were shown as follows. The yarn comprises a first yarn and a second yarn. The first yarn (150D/24F) was formed by spinning polyethylene terephthalate (PET) with 260°C melting point and 20,000 Da to 25,000 Da. The second yarn (150D/24F) was formed by spinning nylon 66 with 265°C melting temperature and 20,000 Da to 30,000 Da. The first yarn was tatted with the second yarn at a number ratio of 1:2 to from the fabric layer. Thermoplastic polyether ester elastomer having 35D hardness, 47:53 soft-segment/hard-segment ratio, 150°C melting point and 30,000 Da to 40,000 Da molecular weight was pressed by a film extrusion process to form the membrane layer. The thickness of the membrane layer was 0.025 mm, and the pre-heat temperature, the hot-press temperature, and the hot-press pressure were respectively 150°C, 160°C and 10 kg/cm².

### Example 5: Preparation of a composite textile

A method of producing a composite textile in Example 5 was similar to that in Example 1. The differences between Example 5 and Example 1 were shown as follows. The yarn (300D/72F) was formed by spinning polyethylene terephthalate with 260°C melting point and 20,000 Da to 25,000 Da, and the yarn was tatted to from the fabric layer. Thermoplastic polyurethane having 98A hardness and 45:55 soft-segment/hard-segment ratio was mixed with thermoplastic olefin having 80A hardness and 65:35 soft-segment/hard-segment ratio at a weight ratio 1:2 to form a second polymer blend. The melting point and thickness of the second polymer blend were respectively 90°C and 90A hardness. The second polymer blend was pressed by a film extrusion process to form the membrane layer. The thickness of the membrane layer was 0.025 mm, the pre-heat temperature, the hot-press temperature, and the hot-press pressure were respectively 90°C, 100°C and 5 kg/cm².

### Example 6: Preparation of a composite textile

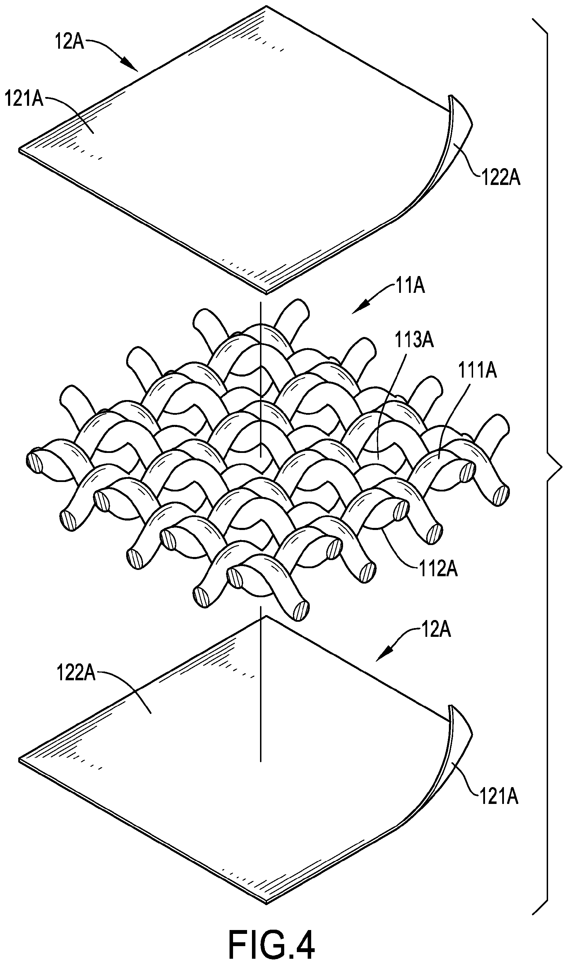

With references to Fig.4, a method of producing a composite textile in accordance with the present invention was shown as follows.

Polyethylene terephthalate with 260°C melting point and 20,000 Da to 25,000 Da molecular weight was spun to form a yarn (150D/72F), and the yarn was tatted to form a fabric layer 11A with a size of 21 cm × 30 cm. The fabric layer 11 comprised a first surface 111A, a second surface 112A, and multiple pores 113A. The first surface 111A was opposite to the second surface 112A of the fabric layer 11A, and the multiple pores 113A were distributed on the fabric layer 11A, and each of the multiple pores 113A connected the first surface 111A and the second surface 112A. Thermoplastic polyurethane with 98A hardness, 45:55 soft-segment/hard-segment ratio, 60°C melting point and 5,000 Da to 10,000 Da molecular weight was pressed by use of a film extrusion process to be two membrane layers 12A. The two membrane layers 12A comprised a first membrane layer and a second membrane layer. Sizes of the first membrane layer and the second membrane layer were 21 cm × 30 cm, and the thicknesses of the first membrane layer and the second membrane layer were both 0.015 mm. The first membrane layer and the second membrane layer of the two membrane layers 12A comprised a third surface 121A and a fourth surface 122A, and the third surface 121A was opposite to the fourth surface 122A.

The fourth surfaces 121A of the two membrane layers 12A were respectively attached to the first surface 111A and the second surface 112A of the fabric layer 11A to form a stacked structure. The stacked structure had an upper surface and a lower surface. The upper surface and the lower surface of the stacked structure were respectively the third surface 121A of each of the member layers 12A. The fourth surfaces 122A of the two membrane layers 12A were respectively in contact with the first surface 111A and the second surface 112A of the fabric layer 11A to respectively form a first interface and a second interface of the stacked structure. The upper surface and the lower surface of the stacked structure were pre-heated at 50°C for 30 minutes, and then the upper surface and the lower surface of the stacked structure were hot-pressed at 60°C hot-press temperature under 20 kg/cm² hot-press pressure for 5 minutes to form a combined structure. The combined structure was cooled down to room temperature to form a composite textile.

For the reason that the pre-heated temperature was equal to the melting point of the thermoplastic polyurethane during pre-heating of the stacked structure and the hot-press temperature was a little higher than the melting point of the thermoplastic polyurethane during hot-pressing processes of the stacked structure, the fourth surfaces 122A of the two membrane layers 12A were in the molten state, allowing the fourth surfaces 122A of the two membrane layers 12A respectively to penetrate from the first surface 111A and the second surface 112A of the fabric layer 11A into the multiple pores 113 of the fabric layer 11. In other words, the first interface and the second interface clearly existed in the stacked structure before pre-heating and pre-pressing processes; however, the interfaces between each of the two membrane layers 12A and the fabric layer 11A were unobvious after pre-heating and pre-pressing the stacked structure. After cooling the combined structure to form the composite textile 10, each of the two membrane layers 12A was able to bind with the fabric layer 11A tightly by penetrating parts of the two membrane layers 12A into the multiple pores 113A of the fabric layer 11A.

The combined structure had an upper surface and a lower surface. The upper surface and the lower surface of the combined structure were respectively the third surface 121A of the two membrane layers 12A. The first interface and the second interface of the combined structure were respectively formed between each of the fourth surface 122A of the membrane layers 12A and the first surface 111A and the second surface 112A of the combined structure. As mentioned above, the first interface and the second interface of the combined structure were unobvious.

The composite textile comprised the fabric layer 11A and the two membrane layers 12A. The fabric layer 11A had the first surface 111A, the second surface 112A, and the multiple pores 113A. The first surface 111A was opposite to the second surface 112A, and the multiple pores 113A were distributed on the fabric layer 11A, and each of the multiple pores 113A connected the first surface 111A and the second surface 112A. The membrane layers 12A respectively had the third surface 121A and the fourth surface 122A, and the third surface 121A was opposite to the fourth surface 122A. The fourth surfaces 122A of the two membrane layers 12A were respectively attached to the first layer 111A and the second layer 112A of the fabric layer 11A, and parts of the fourth surface 122A of the two membrane layers 12A penetrated into the multiple pores 113A of the fabric layer 11A. In other words, an interface of the composite textile positioned between the fabric layer 11A and the two membrane layers 12A was unobvious.

### Example 7: Preparation of a composite textile

A method of producing a composite textile in Example 7 was similar to that in Example 6. The differences between Example 7 and Example 6 were shown as follows. Thermoplastic polyurethane with 50D hardness, 50:50 soft-segment/hard-segment ratio, 190°C melting point and 50,000 Da to 100,000 Da molecular weight was spun to form a yarn (300D/36F), and the yarn was knitted to be the fabric layer. The thermoplastic polyurethane with 90A hardness, 57:43 soft-segment/hard-segment ratio, 85°C melting point, and 10,000 Da to 20,000 Da molecular weight was pressed by a film extrusion process to form the membrane layer. The thickness of the membrane layer was 0.01 mm, and the pre-heat temperature, the hot-press temperature, and the hot-press pressure were respectively 85°C, 100°C and 5 kg/cm².

### Example 8: Preparation of a composite textile

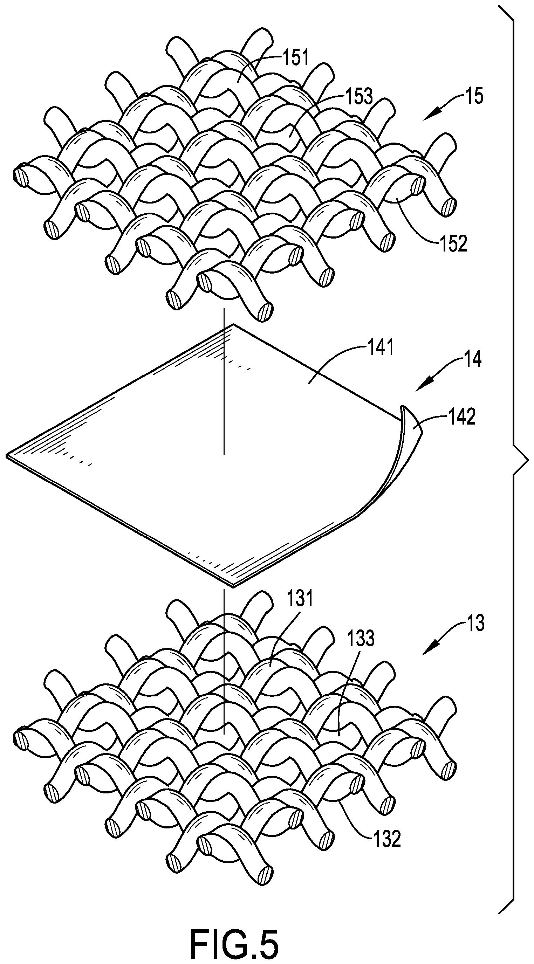

With references to Fig.5, a method of producing a composite textile in accordance with the present invention was shown as follows.

Nylon 66 with 260°C melting point and 20,000 Da to 25,000 Da molecular weight was spun to form a first yarn (150D/24F), and the first yarn was knitted to form a first fabric layer 13 with a size of 21 cm × 30 cm. The first fabric layer 13 comprised a first surface 131, a second surface 132, and multiple pores 133. The first surface 131 was opposite to the second surface 132 of the first fabric layer 13, and the multiple pores 133 were distributed on the fabric layer 13, and each of the multiple pores 133 connected the first surface 131 and the second surface 132. Thermoplastic polyurethane with 98A hardness, 45:55 soft-segment/hard-segment ratio, 60°C melting point and 5,000 Da to 10,000 Da molecular weight was pressed by use of a film extrusion process to form a membrane layer 14. A size of the membrane layer 14 was 21 cm × 30 cm, and the thickness of the membrane layer 14 was 0.025 mm. The membrane layer 14 comprised a third surface 141 and a fourth surface 142, and the third surface 141 was opposite to the fourth surface 142. Thermoplastic polyurethane with 95A hardness, 53:47 soft-segment/hard-segment ratio, 180°C melting point and 50,000 Da to 80,000 Da molecular weight was spun to form a second yarn, and the second yarn was knitted to form a second fabric layer 15 with a size of 21 cm × 30 cm. The second fabric layer 15 comprised a fifth surface 151, a sixth surface 152, and multiple pores 153. The fifth surface 151 was opposite to the sixth surface 152 of the second fabric layer 15, and the multiple pores 153 were distributed on the second fabric layer 15, and each of the multiple pores 153 connected the fifth surface 151 and the sixth surface 152.

The first surface 131 of the first fabric layer 13 and the sixth surface 152 of the second fabric layer 15 were respectively attached to the third surface 141 and the fourth surface 142 of the membrane layer 14 to form a stacked structure. The stacked structure was consisted of the first fabric layer 13, the second fabric layer 15 and the membrane layer 14. The stacked structure had an upper surface and a lower surface. The upper surface of the stacked structure was the fifth surface 151 of the second fabric layer 15; the lower surface of the stacked structure was the second surface 132 of the first fabric layer 13. The first surface 131 of the first fabric layer 13 was in contact with the fourth surface 142 of the membrane layer 14 to form a first interface of the stacked structure. The sixth surface 152 of the second fabric layer 15 was in contact with the third surface 141 of the membrane layer 14 to form a second interface of the stacked structure. The upper surface and the lower surface of the stacked structure were pre-heated at 60°C for 30 minutes, and then the upper surface and the lower surface of the stacked structure were hot-pressed at 80°C hot-press temperature under 50 kg/cm² hot-press pressure for 5 minutes to form a combined structure. The combined structure was cooled down to room temperature to form a composite textile.

For the reason that the pre-heated temperature was equal to the melting point of the thermoplastic polyurethane during pre-heating of the stacked structure and the hot press temperature was a little higher than the melting point of the thermoplastic polyurethane during hot-pressing processes of the stacked structure, the third surface 141 and the fourth surface 142 of the membrane layer14 were in the molten state, allowing the third surface 141 and the fourth surface 142 of the membrane layer14 respectively to be penetrated from the third surface 141 and the fourth surface 142 of the membrane layer 14 into the multiple pores 133 of the first fabric layer 13 and the multiple pores 153 of the second fabric layer 15. In other words, the first interface and the second interface clearly existed in the stacked structure before pre-heating and pre-pressing processes; however, the interfaces between the membrane layer14 and the first fabric layer 13, as well as between the membrane layer 14 and the second fabric layer 15 were unobvious after pre-heating and pre-pressing the stacked structure. After cooling the combined structure to form the composite textile 10, the membrane layer 14 was able to bind with the first fabric layer 13 and the second fabric layer 15 tightly by penetrating parts of the membrane layer 14 into the multiple pores 133 of the first fabric layer 13 and the multiple pores 153 of the second fabric layer 15.

The combined structure had an upper surface and a lower surface. The upper surface and the lower surface of the combined structure were respectively the fifth surface 151 of the second fabric layer 15 and the second surface 132 of the first fabric layer 13. The first interface was formed between the first surface 131 of the first fabric layer 13 and the fourth surface 142 of the membrane layer 14. The second interface of the combined structure was formed between the sixth surface 152 of the second fabric layer 15 and the third surface 141of the membrane layer 14. As mentioned above, the first interface and the second interface of the combined structure were unobvious.

The composite textile comprised the first fabric layer 13, the second fabric layer 15, and the membrane layer 14. The first fabric layer 13 had the first surface 131, the second surface 132, and the multiple pores 133. The first surface 131 was opposite to the second surface 132, and the multiple pores 133 were distributed on the first fabric layer 13, and each of the multiple pores 133 connected the first surface 131 and the second surface 132 of the first fabric layer 13. The membrane layer14 had the third surface 141 and the fourth surface 142, and the third surface 141 was opposite to the fourth surface 142. The second fabric layer 15 had the fifth surface 151, the sixth surface 152, and the multiple pores 153. The fifth surface 151 was opposite to the sixth surface 152, and the multiple pores 153 were distributed on the second fabric layer 15, and each of the multiple pores 153 connected the fifth surface 151 and the sixth surface 152 of the second fabric layer 15. The third surface 141 and the fourth surface 142 of the membrane layer 14 were respectively attached to the sixth surface 152 of the second fabric layer 15 and the first surface 131 of the first fabric layer 13, and parts of the third surface 141 and the fourth surface 142 of the membrane layer 14 penetrated into the multiple pores 133, 153 of the first fabric layer 13 and the second fabric layer 15. In other words, an interface of the composite textile positioned between the first fabric layer 13 and the membrane layer14 was unobvious.

### Example 9: Preparation of a composite textile

A method of producing a composite textile in Example 9 was similar to that in Example 8. The differences between Example 9 and Example 8 were shown as follows. Thermoplastic polyurethane with 64D hardness, 30:70 soft-segment/hard-segment ratio, 210°C melting point and 80,000 Da to 120,000 Da molecular weight was spun to form a first yarn (150D/36F) and a second yarn (150D/36F) respectively. The first yarn and the second yarn were respectively knitted to be the first fabric layer and the second fabric layer. The thermoplastic polyurethane having 98A hardness and 45:55 soft-segment/hard-segment ratio was mixed with the styrene-based thermoplastic elastomer having 80A hardness and 65:35 soft-segment/hard-segment ratio at a weight ratio of 7:3 to form a fourth polymer blend. The melting point and the hardness of the fourth polymer blend were respectively 65°C and 95A.The fourth polymer blend was pressed by a film extrusion process to form the membrane layer. The thickness of the membrane layer was 0.3 mm, and the pre-heat temperature, the hot-press temperature, and the hot-press pressure were respectively 65°C, 85°C and 30 kg/cm².

### Comparative example 1: Preparation of a coated textile

Polyethylene terephthalate with 260°C melting point and 20,000 Da to 25,000 Da molecular weight was spun to form a yarn (300D/72F), and the yarn was tatted to form a textile with a size of 21 cm × 30 cm. Thermoplastic polyurethane with 64D hardness, 30:70 soft-segment/hard-segment ratio, 210°C melting point and 80,000 Da to 120,000 Da molecular weight was dissolved in butanone to form a polymer-coating solution. The polymer-coating solution was coated on the textile, and the textile was baked in the oven for 1 hour. The baked textile was cooled down to room temperature to form a coated textile.

### Comparative example 2: Preparation of an adhesive film textile

Polyethylene terephthalate with 260°C melting point and 20,000 Da to 25,000 Da molecular weight was spun to form a yarn (300D/72F), and the yarn was tatted to form a textile with a size of 21 cm × 30 cm. A melted glue solution (comprising 30% butanone) was prepared. The melted glue solution was spotted on the surface of the textile. A membrane composed of thermoplastic polyurethane with 95A hardness, 53:47 soft-segment/hard-segment ratio, 160°C melting point and 50,000 Da to 80,000 Da molecular weight was attached to the surface of the textile to form a stacked structure. The stacked structure was heated and pressed under 130°C at 1 kg/cm², and then the stacked structure was cooled down to room temperature to form the adhesive film textile.

### Assay 1: Assay of water vapor transmission rate

The composite textiles prepared by Examples 1 to 9, the coated textile prepared by Comparative example 1 and the adhesive film textile prepared by Comparative example 2 were respectively assayed for water vapor transmission rate according to Japanese Industrial Standard L 1099A1 (JIS L 1099A1). Results of the assays were shown in Table 1.

### Assay 2: Assay of pressure tolerance of water

The composite textiles prepared by Examples 1 to 9, the coated textile prepared by Comparative example 1 and the adhesive film textile prepared by Comparative example 2 were respectively assayed for pressure tolerance of water according to Japanese Industrial Standard L 1092 (JIS L 1092). Results of the assays were shown in Table 1.

### Assay 3: Assay of tearing strength

The composite textiles prepared by Examples 1 to 9, the coated textile prepared by Comparative example 1 and the adhesive film textile prepared by Comparative example 2 were respectively assayed for tearing strength according to International Organization for Standardization 13937 (ISO 13937). Results of the assays were shown in Table 1.

**Table 1 The water vapor transmission rate, pressure tolerance of water, and tearing strength of the composite textiles prepared by Examples 1 to 9, the coated textile prepared by Comparative example 1 and the adhesive film textile prepared by Comparative example 2**

| Sample No. | Water vapor transmission rate (g/m²/24 hours) | Pressure tolerance of water (mm H₂O) | Tearing strength | |
|---|---|---|---|---|
| | | | Vertical direction | Cross direction |
| Example 1 | 4,500 | 12,000 | ≥ 50 | ≥ 40 |
| Example 2 | 500 | 12,000 | ≥ 45 | ≥ 40 |
| Example 3 | 1,000 | 15,000 | ≥ 55 | ≥ 45 |
| Example 4 | 6,000 | 10,000 | ≥ 35 | ≥ 30 |
| Example 5 | 1,500 | 10,000 | ≥ 40 | ≥ 30 |
| Example 6 | 2,500 | 15,000 | ≥ 55 | ≥ 45 |
| Example 7 | 2,000 | 15,000 | ≥ 70 | ≥ 60 |
| Example 8 | 4,000 | 10,000 | ≥ 45 | ≥ 35 |
| Example 9 | 3,500 | 10,000 | ≥ 50 | ≥ 40 |
| Comparative example 1 | 1,000 | 3,000 | ≥ 15 | ≥ 10 |
| Comparative example 2 | 3,000 | 6,000 | ≥ 25 | ≥ 20 |

Results showed that the pressure tolerance of water of the composite textiles prepared by Examples 1 to 9 was better than that of the coated textile prepared by Comparative example 1 and the adhesive film textile prepared by Comparative example 2. The reason was that the composite textiles prepared by Examples 1 to 9 had completed structure to provide better pressure tolerance of water.

The tearing strength of the composite textiles prepared by Examples 1 to 9 was better than that of the coated textile prepared by Comparative example 1 and the adhesive film textile prepared by Comparative example 2. The reason was that stronger binding strength between the fabric layer and the membrane layer of the composite textiles prepared by Examples 1 to 9 could provide better tearing strength.

As comparing Examples 1 to 5, the composite textiles prepared by Examples 1 to 3 had better tearing strength than those prepared by Examples 4 and 5. The reason was that the same material prepared for the fabric layer and the membrane layer could provide stronger binding strength between the fabric layer and the membrane layer.

As comparing Examples 1 to 7, the composite textiles prepared by Examples 6 and 7 had bi-membrane layers which were thicker than a single membrane layer, and the bi-membrane layers had better adhesive character to the fabric layer. Therefore, the composite textiles prepared by Examples 6 and 7 had better pressure tolerance of water and tearing strength than those prepared by Examples 1 to 5. Besides, as comparing Example 6 to 7, the composite textiles prepared by Example 6 had better tearing strength than that prepared by Example 7. The reason was that the composite textile prepared by Example 7 had the same material prepared for the fabric layer and the membrane layer which could provide stronger binding strength between the fabric layer and the membrane layer.

## Claims

1. A composite textile (10) comprising:
a first fabric layer (11A, 13) which is formed by weaving, wherein material of the first fabric layer (11A, 13) comprises thermoplastic elastomer or a combination of thermoplastic elastomer and thermoplastic polymer; wherein the first fabric layer (11A, 13) comprises a first surface (111A, 131), a second surface (112A, 132) and multiple pores (113A, 133); wherein the multiple pores (113A, 133) are distributed on the first fabric layer (11A, 13) and connect the first surface (111A, 131) and the second surface (112A, 132); and
a first membrane layer (14), wherein material of the first membrane layer (14) comprises thermoplastic elastomer or a combination of thermoplastic elastomer and thermoplastic polymer, and the melting point of the first fabric layer (13) is higher than the melting point of the first membrane layer (14); wherein the first membrane layer (14) comprises a third surface (141) and a fourth surface (142), and the fourth surface (142) of the first membrane layer (14) is attached to the first surface (131) of the first fabric layer (13), and parts of the fourth surface (142) of the first membrane layer (14) permeate into the multiple pores (133) of the first fabric layer (13).

2. The composite textile (10) as claimed in claim 1, wherein the composite textile (10) further comprises a second fabric layer (15); wherein material of the second fabric layer (15) comprises thermoplastic elastomer, thermoplastic polymer or a combination thereof; wherein the melting point of the second fabric layer (15) is higher than the melting point of the first membrane layer (14); wherein the second fabric layer (15) comprises a fifth surface (151), a sixth surface (152) and multiple pores (153); wherein the multiple pores (153) are distributed on the second fabric layer (15) and connect the fifth surface (151) and the sixth surface (152); wherein the third surface (141) of the first membrane layer (14) is attached to the fifth surface (151) of the second fabric layer (15), and parts of the third surface (141) of the first membrane layer (14) permeate into the multiple pores (153) of the second fabric layer (15).

3. The composite textile (10) as claimed in claim 1, wherein the composite textile (10) further comprises a second membrane layer (12A); wherein material of the second membrane layer (12A) comprises thermoplastic elastomer, thermoplastic polymer or a combination thereof; wherein the melting point of the second membrane layer (12A) is lower than the melting point of the first fabric layer (11 A); wherein the second membrane layer (12A) comprises a third surface (121A) and a fourth surface (122A), and the fourth surface (122A) of the second membrane layer (12A) is attached to the second surface (112A) of the first fabric layer (11A), and parts of the fourth surface (122A) of the second membrane layer (12A) permeate into the multiple pores (113A) of the first fabric layer (11A).

4. The composite textile (10) as claimed in claim 1, wherein the material of the first fabric layer (11A, 13) is the combination of thermoplastic elastomer and thermoplastic polymer; wherein the thermoplastic polymer of the first fabric layer (11A, 13) has the hardness between 85A and 90D and the melting point higher than or equal to 160°C and lower than or equal to 300°C; wherein the material of the first membrane layer (14) is the combination of thermoplastic elastomer and thermoplastic polymer; wherein the thermoplastic polymer of the first membrane layer has the hardness between 10A and 98A and the melting point higher than or equal to 50°C and lower than or equal to 150°C.

5. The composite textile (10) as claimed in claim 1, wherein the thickness of the first membrane layer (14) is larger than or equal to 0.001 mm and smaller than or equal to 1 mm.

6. The composite textile (10) as claimed in claim 1, wherein the material of the first fabric layer (11A, 13) is thermoplastic elastomer, and the material of the first membrane layer (14) is thermoplastic elastomer.

7. The composite textile (10) as claimed in claim 1, wherein the first fabric layer is formed by weaving with a yarn, wherein material of the yarn comprises thermoplastic elastomer or a combination of thermoplastic elastomer and thermoplastic polymer.

8. The composite textile (10) as claimed in claim 7, wherein the yarn is formed by twisting with a first sub-yarn and a second sub-yarn, wherein material of the first sub-yarn includes thermoplastic elastomer, thermoplastic polymer or a combination thereof; and wherein material of the second sub-yarn includes thermoplastic elastomer, thermoplastic polymer or a combination thereof; and at least one of the first sub-yarn and the second sub-yarn comprises thermoplastic elastomer.

9. The composite textile (10) as claimed in claim 8, wherein the material of the first sub-yarn is thermoplastic polymer, and the material of the second sub-yarn is thermoplastic elastomer; wherein based on the total weight of the yarn, the weight percentage of the second sub-yarn is between 10 wt% and 90 wt%.

10. The composite textile (10) as claimed in claim 1, wherein the first fabric layer is formed by weaving with a first yarn and a second yarn, wherein material of the first yarn comprises thermoplastic elastomer, thermoplastic polymer or a combination thereof; wherein material of the second yarn comprises thermoplastic elastomer, thermoplastic polymer or a combination thereof; and at least one of the first yarn and the second yarn comprises thermoplastic elastomer.

## Patentansprüche

1. Ein Verbundtextil (10), umfassend:
eine erste Gewebeschicht (11A, 13), die durch Weben gebildet ist, wobei Material der ersten Gewebeschicht (11A, 13) thermoplastisches Elastomer oder eine Kombination aus thermoplastischem Elastomer und thermoplastischem Polymer umfasst, wobei die erste Gewebeschicht (11A, 13) eine erste Fläche (111A, 131), eine zweite Fläche (112A, 132) und mehrere Poren (113A, 133) umfasst, wobei die mehreren Poren (113A, 133) auf der ersten Gewebeschicht (11A, 13) verteilt sind und die erste Fläche (111A, 131) und die zweite Fläche (112A, 132) verbinden, und
eine erste Membranschicht (14), wobei Material der ersten Membranschicht (14) thermoplastisches Elastomer oder eine Kombination aus thermoplastischem Elastomer und thermoplastischem Polymer umfasst und der Schmelzpunkt der ersten Gewebeschicht (13) höher als der Schmelzpunkt der ersten Membranschicht (14) ist, wobei die erste Membranschicht (14) eine dritte Fläche (141) und eine vierte Fläche (142) umfasst, und die vierte Fläche (142) der ersten Membranschicht (14) an der ersten Fläche (131) der ersten Gewebeschicht (13) angebracht ist, und Teile der vierten Fläche (142) der ersten Membranschicht (14) in die mehreren Poren (133) der ersten Gewebeschicht (13) eindringen.

2. Das Verbundtextil (10) nach Anspruch 1, wobei das Verbundtextil (10) ferner eine zweite Gewebeschicht (15) umfasst, wobei Material der zweiten Gewebeschicht (15) thermoplastisches Elastomer, thermoplastisches Polymer oder eine Kombination davon umfasst, wobei der Schmelzpunkt der zweiten Gewebeschicht (15) höher als der Schmelzpunkt der ersten Membranschicht (14) ist, wobei die zweite Gewebeschicht (15) eine fünfte Fläche (151), eine sechste Fläche (152) und mehrere Poren (153) umfasst, wobei die mehreren Poren (153) auf der zweiten Gewebeschicht (15) verteilt sind und die fünfte Fläche (151) und die sechste Fläche (152) verbinden, wobei die dritte Fläche (141) der ersten Membranschicht (14) an der fünften Fläche (151) der zweiten Gewebeschicht (15) angebracht ist, und Teile der dritten Fläche (141) der ersten Membranschicht (14) in die mehreren Poren (153) der zweiten Gewebeschicht (15) eindringen.

3. Das Verbundtextil (10) nach Anspruch 1, wobei das Verbundtextil (10) ferner eine zweite Membranschicht (12A) umfasst, wobei Material der zweiten Membranschicht (12A) thermoplastisches Elastomer, thermoplastisches Polymer oder eine Kombination davon umfasst, wobei der Schmelzpunkt der zweiten Membranschicht (12A) niedriger als der Schmelzpunkt der ersten Gewebeschicht (11A) ist, wobei die zweite Membranschicht (12A) eine dritte Fläche (121A) und eine vierte Fläche (122A) umfasst, und die vierte Fläche (122A) der zweiten Membranschicht (12A) an der zweiten Fläche (112A) der ersten Gewebeschicht (11A) angebracht ist, und Teile der vierten Fläche (122A) der zweiten Membranschicht (12A) in die mehreren Poren (113A) der ersten Gewebeschicht (11A) eindringen.

4. Das Verbundtextil (10) nach Anspruch 1, wobei das Material der ersten Gewebeschicht (11A, 13) die Kombination aus thermoplastischem Elastomer und thermoplastischem Polymer ist, wobei das thermoplastische Polymer der ersten Gewebeschicht (11A, 13) eine Härte zwischen 85A und 90D und einen Schmelzpunkt von größer oder gleich 160°C und kleiner oder gleich 300°C hat, wobei das Material der ersten Membranschicht (14) die Kombination aus thermoplastischem Elastomer und thermoplastischem Polymer ist, wobei das thermoplastische Polymer der ersten Membranschicht eine Härte zwischen 10A und 98A und einen Schmelzpunkt von größer oder gleich 50°C und kleiner oder gleich 150°C hat.

5. Das Verbundtextil (10) nach Anspruch 1, wobei die Dicke der ersten Membranschicht (14) größer oder gleich 0,001 mm und kleiner oder gleich 1 mm ist.

6. Das Verbundtextil (10) nach Anspruch 1, wobei das Material der ersten Gewebeschicht (11A, 13) thermoplastisches Elastomer ist und das Material der ersten Membranschicht (14) thermoplastisches Elastomer ist.

7. Das Verbundtextil (10) nach Anspruch 1, wobei die erste Gewebeschicht durch Weben mit einem Garn ausgebildet ist, wobei Material des Garns thermoplastisches Elastomer oder eine Kombination aus thermoplastischem Elastomer und thermoplastischem Polymer umfasst.

8. Das Verbundtextil (10) nach Anspruch 7, wobei das Garn durch Verzwirnen mit einem ersten Teilgarn und einem zweiten Teilgarn ausgebildet ist, wobei Material des ersten Teilgarns thermoplastisches Elastomer, thermoplastisches Polymer oder eine Kombination davon umfasst, und wobei Material des zweiten Teilgarns thermoplastisches Elastomer, thermoplastisches Polymer oder eine Kombination davon umfasst, und mindestens eines von dem ersten Teilgarn und dem zweiten Teilgarn thermoplastisches Elastomer umfasst.

9. Das Verbundtextil (10) nach Anspruch 8, wobei das Material des ersten Teilgarns thermoplastisches Polymer ist und das Material des zweiten Teilgarns thermoplastisches Elastomer ist, wobei, basierend auf dem Gesamtgewicht des Garns, der Gewichtsanteil des zweiten Teilgarns zwischen 10 Gew.-% und 90 Gew.-% liegt.

10. Das Verbundtextil (10) nach Anspruch 1, wobei die erste Gewebeschicht durch Weben mit einem ersten Garn und einem zweiten Garn ausgebildet ist, wobei Material des ersten Garns thermoplastisches Elastomer, thermoplastisches Polymer oder eine Kombination davon umfasst, wobei Material des zweiten Garns thermoplastisches Elastomer, thermoplastisches Polymer oder eine Kombination davon umfasst, und mindestens eines von dem ersten Garn und dem zweiten Garn thermoplastisches Elastomer umfasst.

## Revendications

1. Textile composite (10) comprenant :
une première couche de tissu (11A, 13) qui est formée par tissage, dans lequel le matériau de la première couche de tissu (11A, 13) comprend un élastomère thermoplastique ou une combinaison d'élastomère thermoplastique et de polymère thermoplastique; dans lequel la première couche de tissu (11A, 13) comprend une première surface (111A, 131), une deuxième surface (112A, 132) et de multiples pores (113A, 133); dans lequel les multiples pores (113A, 133) sont répartis sur la première couche de tissu (11A, 13) et relient la première surface (111A, 131) et la deuxième surface (112A, 132) ; et
une première couche de membrane (14), dans lequel le matériau de la première couche de membrane (14) comprend un élastomère thermoplastique ou une combinaison d'élastomère thermoplastique et de polymère thermoplastique, et le point de fusion de la première couche de tissu (13) est plus élevé que le point de fusion de la première couche de membrane (14) ; dans lequel la première couche de membrane (14) comprend une troisième surface (141) et une quatrième surface (142), et la quatrième surface (142) de la première couche de membrane (14) est attachée à la première surface (131) de la première couche de tissu (13), et des parties de la quatrième surface (142) de la première couche de membrane (14) pénètrent dans les multiples pores (133) de la première couche de tissu (13).

2. Textile composite (10) selon la revendication 1, dans lequel le textile composite (10) comprend en outre une seconde couche de tissu (15) ; dans lequel le matériau de la seconde couche de tissu (15) comprend un élastomère thermoplastique, un polymère thermoplastique ou une combinaison de ceux-ci ; dans lequel le point de fusion de la seconde couche de tissu (15) est plus élevé que le point de fusion de la première couche de membrane (14); dans lequel la seconde couche de tissu (15) comprend une cinquième surface (151), une sixième surface (152) et de multiples pores (153) ; dans lequel les multiples pores (153) sont répartis sur la seconde couche de tissu (15) et relient la cinquième surface (151) et la sixième surface (152) ; dans lequel la troisième surface (141) de la première couche de membrane (14) est attachée à la cinquième surface (151) de la seconde couche de tissu (15), et des parties de la troisième surface (141) de la première couche de membrane (14) pénètrent dans les multiples pores (153) de la seconde couche de tissu (15).

3. Textile composite (10) selon la revendication 1, dans lequel le textile composite (10) comprend en outre une seconde couche de membrane (12A) ; dans lequel le matériau de la seconde couche de membrane (12A) comprend un élastomère thermoplastique, un polymère thermoplastique ou une combinaison de ceux-ci ; dans lequel le point de fusion de la seconde couche de membrane (12A) est inférieur au point de fusion de la première couche de tissu (11A); dans lequel la seconde couche de membrane (12A) comprend une troisième surface (121A) et une quatrième surface (122A), et la quatrième surface (122A) de la seconde couche de membrane (12A) est attachée à la deuxième surface (112A) de la première couche de tissu (11A), et des parties de la quatrième surface (122A) de la seconde couche de membrane (12A) pénètrent dans les multiples pores (113A) de la première couche de tissu (11A).

4. Composite textile (10) selon la revendication 1, dans lequel le matériau de la première couche de tissu (11A, 13) est la combinaison d'élastomère thermoplastique et de polymère thermoplastique ; dans lequel le polymère thermoplastique de la première couche de tissu (11A, 13) a la dureté entre 85A et 90D et le point de fusion supérieur ou égal à 160 °C et inférieur ou égal à 300 °C ; dans lequel le matériau de la première couche de membrane (14) est la combinaison d'élastomère thermoplastique et de polymère thermoplastique ; dans lequel le polymère thermoplastique de la première couche de membrane a la dureté entre 10A et 98A et le point de fusion supérieur ou égal à 50 °C et inférieur ou égal à 150 °C.

5. Textile composite (10) selon la revendication 1, dans lequel l'épaisseur de la première couche de membrane (14) est supérieure ou égale à 0,001 mm et inférieure ou égale à 1 mm.

6. Textile composite (10) selon la revendication 1, dans lequel le matériau de la première couche de tissu (11A, 13) est un élastomère thermoplastique, et le matériau de la première couche de membrane (14) est un élastomère thermoplastique.

7. Textile composite (10) selon la revendication 1, dans lequel la première couche de tissu est formée par tissage avec un fil, dans lequel le matériau du fil comprend un élastomère thermoplastique ou une combinaison d'élastomère thermoplastique et de polymère thermoplastique.

8. Textile composite (10) selon la revendication 7, dans lequel le fil est formé par torsion avec un premier fil secondaire et un second fil secondaire, dans lequel le matériau du premier fil secondaire inclut un élastomère thermoplastique, un polymère thermoplastique ou une combinaison de ceux-ci ; et dans lequel le matériau du second fil secondaire inclut un élastomère thermoplastique, un polymère thermoplastique ou une combinaison de ceux-ci ; et au moins un du premier fil secondaire et du second fil secondaire comprend un élastomère thermoplastique.

9. Textile composite (10) selon la revendication 8, dans lequel le matériau du premier fil secondaire est un polymère thermoplastique, et le matériau du second fil secondaire est un élastomère thermoplastique ; dans lequel sur la base du poids total du fil, le pourcentage en poids du second fil secondaire est entre 10 % en poids et 90 % en poids.

10. Textile composite (10) selon la revendication 1, dans lequel la première couche de tissu est formée par tissage avec un premier fil et un second fil, dans lequel le matériau du premier fil comprend un élastomère thermoplastique, un polymère thermoplastique ou une combinaison de ceux-ci ; dans lequel le matériau du second fil comprend un élastomère thermoplastique, un polymère thermoplastique ou une combinaison de ceux-ci ; et au moins un du premier fil et du second fil comprend un élastomère thermoplastique.
